# EUROPÄISCHE PATENTSCHRIFT

(11) **EP 0 491 253 B1**
(45) Veröffentlichungstag und Bekanntmachung des Hinweises auf die Patenterteilung: **19.04.1995**
(21) Anmeldenummer: 91121008.6
(22) Anmeldetag: 07.12.1991
(51) Int. Cl.: C09J 7/02, B41N 6/02

(54) **Klischee-Montageband**
Mounting tape
Feuille de montage

(30) Priorität: 17.12.1990 DE 9016999 U
(43) Veröffentlichungstag der Anmeldung: 24.06.1992
(73) Patentinhaber: Beiersdorf Aktiengesellschaft, 20245 Hamburg (DE)
(72) Erfinder: Hartmann, Manfred, W-2000 Hamburg 52 (DE); Schacht, Wolfgang, Dr., W-2000 Hamburg 36 (DE)

(56) Entgegenhaltungen:
- EP-A- 0 206 760
- EP-A- 0 320 676
- US-A- 4 358 489

## Beschreibung

Die Erfindung betrifft ein Klischee-Montageband, wie es im Stand der Technik mit Schaumstoffträger und beidseitiger Klebmasse verwendet wird.

Montagebänder mit Schaumfolienträger sind seit langem bekannt und handelsüblich. Jedoch ist nach wie vor die Herstellung von Montagebändern geringer Dickenschwankung ein grundlegendes Problem, insbesondere bei Dickentoleranzen unter ± 15 %. Geringe Abweichungen der Dicke vom Sollwert sowie geringe Gesamtdicken sind in vielen Einsatzbereichen von doppelseitigen Schaumstoffklebebändern erwünscht bzw. notwendig, insbesondere auch in der Druckindustrie. Beim Flexodruckverfahren ist es z.B. vorteilhaft, das Polymerdruckklischee mittels eines doppelseitigen Klebebandes auf den Druckzylinder zu montieren, wenn das Klebeband eine geeignete Stauchhärte und geringe Dickenschwankungen aufweist. Die Druckqualität kann auf diese Weise nämlich erheblich gesteigert werden. Nach Beendigung des Druckvorganges muß sich allerdings das Klebeband möglichst rückstandsfrei sowohl vom Druckzylinder als auch vom Klischee wieder ablösen lassen, was eine hinreichende Reißfestigkeit voraussetzt.

Bislang werden für diesen Anwendungsbereich Klebebänder auf der Basis von veredelten Polyurethanschäumen (Firma Mayser, Lindenberg) oder gespalten bzw. geschliffenen Polyethylen- oder Polyethylenvinylacetatmischpolymerisatschäumen (Firma Alveo, Luzern) eingesetzt. In beiden Fällen ist zur Gewinnung einer hinreichenden Reißfestigkeit bei der gleichzeitig notwendigen niedrigen Stauchhärte die Verstärkung mit einer PVC-, Polyester oder ähnlichen Folie notwendig. Dieser zusätzliche Hestellschritt und Materialeinsatz führt nicht nur zu einer erheblichen Verteuerung des Produkts, sondern beeinflußt die Stauchhärte negativ, da ein Teil der zur Verfügung stehenden Höchstdicke durch eine inkompressible Folie und einen Kaschierkleber ersetzt werden muß. Die eingesetzten Schaumstoffolien auf PE-Basis besitzen zwar gegenüber den obengenannten auf PU-Basis den Vorteil, daß sie in wesentlich niedrigeren Stauchhärten erhältlich sind. Auch in Bezug auf die Verschlechterung des Rückstellverhaltens in Folge von Ermüdung des Materials nach zahlreichen Komprimierungs-Entspannungs-Zyklen sind die geschlossenzelligen PE- den offenzelligen PU-Folien überlegen. Ein großes Problem stellen jedoch die nur in relativ großen Dicken (> 500 »m) handelsüblichen PE-Schaumfolien und die starken Dickenschwankungen dar. Diese schließen den Einsatz der unbearbeiteten Folien für einen weiten Bereich der obengenannten Anwendungsgebiete aus. Einen Ausweg bietet hier zwar das aufwendige Spalten oder Schleifen der Schaumfolie. Dabei verliert jedoch das Material noch mehr an Reißfestigkeit und auch die Geschlossenzelligkeit des Schaumes wird reduziert, der genannte Vorteil geht teilweise wieder verloren.

Aufgabe der Erfindung war es, hier Abhilfe zu schaffen, insbesondere ein Klischee-Montageband zu schaffen, das die Vorteile eines geschlossenzelligen Polyolefin-, insbesonderen PE-Schaumfolienträgers aufweist und zugleich eine geringe Gesamtdicke sowie Dickenschwankung zeigt, wie sie von der Druckindustrie gefordert wird.

Demgemäß betrifft die Erfindung ein Klischee-Montageband, wie dies im Anspruch 1 und den Unteransprüchen näher gekennzeichnet ist.

Die Schaumstoffolie als Trägermaterial besteht vorteilhaft aus Polyolefin, insbesondere aus Polyethylen oder Polyethylenmischpolymerisat, z.B. mit Vinylacetat. Die Trägerfolie hat dabei eine Dicke von 200 - 1000 »m, insbesondere 200 - 500, »m ein Raumgewicht von 50 - 300 kg/m³, eine Stauchhärte von 10-80 N/cm² bei 50 % Druckverformung (gemäß DIN 53 577) und bevorzugt eine solche von 10 - 50 N/cm². Insbesondere zeichnet sich das erfindungsgemäße Klebeband durch eine geringe Dicke und auch Schwankung der Dicke aus, die vorteilhaft bis zu höchstens ± 12 %, insbesondere 5 - 10 % beträgt.

Erfindungsgemäß wird als Trägermaterial für ein derartiges Klebeband eine monoaxial gereckte Polyolefin-, insbesondere PE- oder PE-Mischpolymerisatschaumfolie eingesetzt. Durch diesen Reckvorgang werden geeignete Trägermaterialien mit einer Dicke von weniger als 500 um überhaupt erst zugänglich, aber auch Träger bis zu 1000 »m sind geeignet. So läßt sich z.B. aus einer 500 »m dicken PE/EVA-Schaumfolie mit einem Raumgewicht von 200 kg/m³ bei einem Reckverhältnis von 1:2 eine 350 »m dicke Folie erhalten.

Zudem läßt sich vorteilhaft durch eine in-line-Dickenmessung des Schaumes und entsprechende Steuerung des Reckverhältnisses die Dickentoleranz auf weniger als ± 10 % verringern. Da sich auch dickere Schaumfolien auf diese Weise kalibrieren lassen, werden viele neue Anwendungsgebiete für Klebebänder auf der Basis des relativ preisgünstigen Schaumes neu erschlossen, insbesondere auch der oben erwähnte Einsatz beim Flexodruck.

Besonders günstig für das Endprodukt wirkt sich die durch das Verstrecken um bis zu 30 % erhöhte Reißkraft des Materials aus, da dadurch die sonst notwendige Verstärkung mit einer Folie nicht notwendig ist. Ein aus dem verstreckten Material gefertigtes doppelseitiges Klebeband läßt sich z.B. noch in Stärken unter 500 »m bei einem Raumgewicht von 200 kg/m³ ohne ab- oder einzureißen wieder entfernen, selbst bei Klebkräften von 5 N/cm.

Ein besonderer Vorteil bei der Einstellung einer gewünschten Dicke durch Verstrecken der Schaumfolie anstelle von Spalten oder Schleifen besteht zudem darin, daß hier ein Materialgewinn in Form einer größeren nutzbaren Fläche vorliegt, während bei den anderen Verfahren ein Teil des eingesetzten Materials als Abfall anfällt.

Überraschenderweise wurde zusätzlich zu diesen Vorteilen gefunden, daß bei den Materialien, obwohl das Raumgewicht beim Verstrecken nahezu unverändert bleibt, die Stauchhärte bis zu 30 % abnimmt. Dieser Effekt stellt einen besonderen Vorteil für den Einsatz bei der Verklebung von Druckklischees dar.

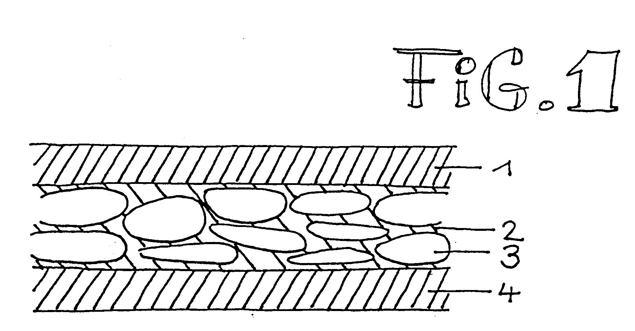

In der Figur 1 ist ein schematischer Querschnitt durch ein erfindungsgemäßes Klischee-Montageband dargestellt, mit Selbstklebemasse 1 und 4, PE-Schaumfolienträger 2 und Schaumblasen 3.

### Beispiel 1

Es wurde eine 550 ± 20 % dicke, vernetzte PE-Schaumfolie (TE 500.5 der Firma Alveo, enthaltend Vinylacetat im Polymerisat) bei Raumtemperatur monoaxial längs verstreckt. Die Streckgeschwindigkeit betrug 10 m/min, der Reckspalt 5 cm. Während des Streckens wurde laufend die Dicke gemessen. Das Streckverhältnis betrug 1 : 2 bis 1 : 2,5. Erhalten wurde ein Material mit einer Dicke von 380 »m ± 10 %. Die Stauchhärte (50 % Druckverformung) nahm von 38 auf 30 N/cm² ab, die Reißkraft von 18 auf 23 N/cm zu, die Reißdehnung von 300 % auf auf 100 % ab. Das Material verlor in der Breite 6 %, ergab aber eine um 25% erhöhte Lauflänge.

Nach beidseitiger Coronavorbehandlung des Schaumes wurde je Seite 30 g/m² einer Polyacrylatklebemasse (DE-PS 15 69 898, Beispiel 2) im Transferverfahren aufgebracht (Ausstreichen der lösungsmittelhaltigen Klebemasse auf Trennpapier, Trocknen bei 80°C, Kaschieren auf den Schaum, Entfernen eines der Trennpapiere).

Das fertige Produkt besaß eine Gesamtdicke von 44 »m ± 10%, die Klebkraft des einseitig mit einer 23 »m dicken Polyesterfolie (Hostaphan Fa. Hoechst) abgedeckten Produktes betrug 4,8 N/cm (AFERA 4001 P 11).

Bei der Klischee-Verklebung wurde damit ein hervorragendes Druckbild erzielt.

## Patentansprüche

1. Klische-Montageband mit Selbstklebemasse (1, 4) auf beiden Seiten eines monoaxial gereckten und vernetzten Polyolefin-, insbesondere PE-Schaumfolienträgers (2) mit geringer Dickenschwankung und mit einer Stauchhärte von 10 - 80, insbesondere 10 - 50 N/cm² bei 50% Druckverformung.

2. Klischee-Montageband nach Anspruch 1, worin der Schaumfolienträger (2) eine Dicke von 200-1000 »m und eine Dickenschwankung von ± 12 %, insbesondere 5 - 10% aufweist.

3. Klischee-Montageband nach Anspruch 1, worin der Schaumfolienträger (2) aus Polyethylen oder einem Polyethylenmischpolymerisat, wie einem solchen mit Vinylacetat, besteht.

4. Klischee-Montageband nach Anspruch 1 oder 2, worin die geringe Dickenschwankung des Schaumfolienträgers (2) durch monoaxiales Recken einer Schaumfolie erzielt ist, unter Steuerung des Reckverhältnisses in Abhängigkeit von einer in-line-Dickenmessung, insbesondere mit einem Längs-Reckverhältnis von 1,5 - 4, bevorzugt 2 - 2,5.

5. Klischee-Montageband nach Anspruch 1, worin die Selbstklebemasse (1, 4) eine solche auf Basis Naturkautschuk, Synthesekautschuk oder insbesondere Polyacrylatbasis ist.

6. Klischee-Montageband nach Anspruch 1, dadurch gekennzeichnet, daß es mit einer Abdeckung, wie einer Folie oder Papier, einseitig versehen und zur Rolle gewickelt ist.

## Claims

1. Plate mounting tape with a self-adhesive composition (1, 4) on both sides of a monoaxially stretched and crosslinked polyolefin substrate, in particular a PE foam film substrate (2) having low variation in thickness and having a compressive stress value of 10 - 80, in particular 10 - 50 N/cm² under 50% compressive deformation.

2. Plate mounting tape according to Claim 1, wherein the foam film substrate (2) has a thickness of 200 - 1000 »m and a variation in thickness of ± 12%, in particular 5 - 10%.

3. Plate mounting tape according to Claim 1, wherein the foam film substrate (2) consists of polyethylene or a polyethylene copolymer, such as such a copolymer with vinyl acetate.

4. Plate mounting tape according to Claim 1 or 2, wherein the small variation in thickness of the foam film substrate (2) is achieved by monoaxial stretching of a foam film, with the stretching ratio being controlled as a function of an in-line thickness measurement, in particular with a longitudinal stretching ratio of 1.5 - 4, preferably 2 - 2.5.

5. Plate mounting tape according to Claim 1, wherein the self-adhesive composition (1, 4) is such a composition based on natural rubber, synthetic rubber or, in particular, a polyacrylate base.

6. Plate mounting tape according to Claim 1, characterised in that it is provided on one side with a covering, such as a film or paper, and is wound into a roll.

## Revendications

1. Bande de montage de cliché ayant une masse auto-adhésive (1, 4) des des côtés d'un support de pellicule de mousse réticulé en polyoléfine, en particulier en PE (2) à étirage mono-axial, à faible variation d'épaisseur et avec une résistance à l'écrasage de 10 - 80, en particulier de 10 - 50 N/cm² pour une déformation rémanente sous compression de 50 %.

2. Bande de montage de cliché selon la revendication 1, dans laquelle le support de pellicule de mousse (2) présente une épaisseur de 200 - 1 000 microns et une variation d'épaisseur de ± 12 %, en particulier de 5 - 10 %.

3. Bande de montage de cliché selon la revendication 1, dans laquelle le support de pellicule de mousse (2) est composé de polyéthylène ou d'un polymérisat mixte de polyéthylène, tel que celui obtenu avec l'acétate de vinyle.

4. Bande de montage de cliché selon la revendication 1 ou 2, dans laquelle la faible variation d'épaisseur du support de pellicule de mousse (2) est obtenue par un étirage mono-axial d'une pellicule de mousse, sous contrôle du rapport d'étirage en fonction d'une mesure d'épaisseur en ligne, en particulier avec un rapport d'étirage longitudinal de 1,5 - 4, de préférence de 2 - 2,5.

5. Bande de montage de cliché selon la revendication 1, dans laquelle la masse auto-adhésive (1, 4) est une masse auto-adhésive à base de caoutchouc naturel, de caoutchouc synthetique ou en particulier à base de polyacrylate.

6. Bande de montage de cliché selon la revendication 1, caractérisée en ce qu'elle est pourvue d'un côté d'un revêtement, corne une pellicule ou un papier, et qu'elle est enroulée sous forme de rouleau.
